Europäisches Patentamt

European Patent Office

Office européen des brevets

(11) Veröffentlichungsnummer: **0 432 423 A1**

(12) **EUROPÄISCHE PATENTANMELDUNG**

(21) Anmeldenummer: 90120516.1

(22) Anmeldetag: 25.10.90

(51) Int. Cl.5 **B29C 47/92**, B29C 55/28

(30) Priorität: 13.12.89 DE 3941185

(43) Veröffentlichungstag der Anmeldung:
19.06.91 Patentblatt 91/25

(84) Benannte Vertragsstaaten:
**DE FR GB IT**

(71) Anmelder: Windmöller & Hölscher
Münsterstrasse 50
W-4540 Lengerich(DE)

(72) Erfinder: Feistkorn, Werner, Dr. Dipl.-Ing.
Fährweg 30
W-4401 Saerbeck(DE)
Erfinder: Voss, Klaus-Peter, Dipl.-Ing.
Lessingsr. 10
W-4540 Lengerich(DE)

(74) Vertreter: Gossel, Hans K., Dipl.-Ing. et al
Rechtsanwälte Lorenz E.,Gossel
H.K.,Dipl.-Ing.,Philipps I.,Schäuble,
P.B.,Dr.,Jackermeier,S.,Dr,Zinnecker,A.,Dipl.--
Ing.,Laufhütte,D., Dr.-Ing.,Ingerle,R.E.,Dr.
Widenmayerstrasse 23 D-8000 München
22(DE)

(54) **Verfahren zur Regelung der Foliendicke von im Blasverfahren hergestellten und axial, vorzugsweise biaxial verstreckten Schlauchfolien.**

(57) Zur axialen vorzugsweise biaxialen Verstrecken von nach ihrer Herstellung in einer Blasfolienextruderanlage flachgelegten Schlauchfolien werden diese wieder zu einer Schlauchfolienblase (4) aufgeblasen oder zu einem Folienschlauch aufgeweitet. Im aufgeblasenen oder aufgeweiteten Zustand durchlaufen diese sodann einen Ofen (11), aus dem sie unter erneuter Flachlegung (12) mit einer Geschwindigkeit abgezogen werden, die entsprechend dem gewünschten Reckverhältnis gegenüber der Einlaufgeschwindigkeit erhöht ist. Um zu gewährleisten, daß die verstreckten Schlauchfolien über ihren Umfang eine im wesentlichen gleiche Dickenverteilung aufweisen, wird die Foliendicke der aus dem Ofen (11) austretenden verstreckten Schlauchfolie vor oder nach ihrer Flachlegung (12) über ihren Umfang gemessen und entsprechend gemessenen Dicken des Umfangsprofils wird die Dickenverteilung über das Umfangsprofil der in der Blasfolienextruderanlage hergestellten Schlauchfolie so eingestellt, daß in dem Ofen während des Verstreckens aufgrund ungleichmäßiger Erwärmung und ggf. anderer Störeinflüsse erzeugte Abweichungen von der mittleren Foliendicke im wesentlichen kompensiert werden.

EP 0 432 423 A1

# VERFAHREN ZUR REGELUNG DER FOLIENDICKE VON IM BLASVERFAHREN HERGESTELLTEN UND AXIAL, VORZUGSWEISE BIAXIAL VERSTRECKTEN SCHLAUCHFOLIEN

Die Erfindung betrifft ein Verfahren zur Regelung der Foliendicke von axial, vorzugsweise biaxial verstreckten Schlauchfolien, die nach ihrer Herstellung in einer Blasfolienextruderanlage flachgelegt, anschließend wieder zu einer Schlauchfolienblase aufgeblasen oder zu einem Folienschlauch aufgeweitet und im aufgeblasenen oder aufgeweiteten Zustand einen Ofen durchlaufen, aus dem sie unter erneuter Flachlegung mit einer Geschwindigkeit abgezogen werden, die entsprechend dem gewünschten Reckverhältnis gegenüber der Einlaufgeschwindigkeit erhöht ist.

Nach diesem Verfahren, das aus der DE-OS 20 57 255 bekannt ist, hergestellte verstreckte Schlauchfolien weisen den Nachteil auf, daß sie über ihren Umfang unterschiedlich dick sind. Diese unterschiedlichen Dicken ergeben sich nicht nur aus den unterschiedlichen Dicken der im Blasverfahren hergestellten und in den Ofen oder Recktunnel einlaufenden Schlauchfolie, sondern insbesondere auch daraus, daß die durch den Ofen durchlaufende Schlauchfolie während ihrer Verstreckung nicht gleichmäßig erwärmt wird. Eine in dem Ofen ungleichmäßig erwärmte Schlauchfolie besitzt aber ein unterschiedliches Dehnverhalten, so daß sich selbst dann Dickenschwankungen über den Umfang der Schlauchfolie während des Verstreckens ergeben, wenn diese bei ihrem Einlauf in den Ofen eine im wesentlichen gleichmäßige Dickenverteilung über ihren Umfang aufweist.

Bei dem aus der DE-OS 20 57 255 bekannten Verfahren ergeben sich während des Verstreckens der erneut aufgeweiteten und erwärmten Schlauchfolie nicht nur wegen einer ungleichmäßigen Erwärmung Dickenabweichungen, sondern zusätzlich haben beispielsweise auch die geometrischen Verhältnisse einen Einfluß auf die Dickenverteilung der Folie über ihren Umfang. Ungleichmäßige geometrische Verhältnisse, die bei einem Verstrecken unterschiedliche Foliendicken zur Folge haben können, ergeben sich insbesondere im Übergangsbereich von der flachliegenden Folie zu der schlauch- oder zylinderförmig aufgeblasenen oder aufgeweiteten Schlauchfolie.

Aufgabe der Erfindung ist es daher, ein Verfahren der eingangs angegeben Art zu schaffen, nach dem sich verstreckte Schlauchfolien aus thermoplastischem Kunststoff herstellen lassen, die im verstreckten Zustand über ihren Umfang eine im wesentlichen gleichmäßige Dickenverteilung aufweisen. Es sollen somit verstreckte Schlauchfolien nach dem bekannten Verfahren hergestellt werden, die über ihren Umfang eine im wesentlichen gleichmäßige, in einem engen Toleranzbereich liegende Dickenverteilung aufweisen, also Dicken, die nicht oder nur geringfügig von der mittleren Dicke abweichen.

Erfindungsgemäß wird diese Aufgabe bei einem Verfahren der gattungsgemäßen Art dadurch gelöst, daß die Foliendicke der aus dem Ofen austretenden verstreckten Schlauchfolie vor oder nach ihrer Flachlegung über ihren Umfang gemessen und entsprechend den gemessenen Dicken des Umfangsprofils die Dickenverteilung über das Umfangsprofil der in der Blasfolienextruderanlage hergestellten Schlauchfolie so eingestellt wird, daß in dem Ofen während des Verstreckens aufgrund ungleichmäßiger Erwärmung und gegebenenfalls anderer Störeinflüsse erzeugte Abweichungen von der mittleren Foliendicke im wesentlichen kompensiert werden. Nach dem erfindungsgemäßen Verfahren wird also in der in den Ofen einlaufenden aufgeblasenen oder aufgeweiteten Schlauchfolie ein Einlaufprofil mit einer Dickenverteilung über den Umfang erzeugt, das aufgrund ungleichmäßiger Wärmeverteilungen in dem Ofen und oder konstruktiver oder geometrischer Bedingungen hervorgerufene Dickenabweichungen über den Umfang der Schlauchfolie ausgleicht. Erfindungsgemäß wird also ein in den Ofen einlaufendes Einlaufprofil des aufgeblasenen oder aufgeweiteten Folienschlauches mit über den Umfang unregelmäßiger Dickenverteilung erzeugt, das auf die Wärmeverteilung und die geometrischen und konstruktiven Bedingungen während des Aufweitens und in dem Ofen so abgestimmt ist, daß sich nach dem Verstrecken eine Schlauchfolie mit im wesentlichen gleichmäßiger Dickenverteilung über ihren Umfang ergibt.

Die Dickenverteilung der in den Ofen einlaufenden Schlauchfolie, die eine verstreckte Folie mit im wesentlichen gleichmäßiger Dicke über ihren Umfang ergibt, wird nach bekannten Steuerungs- oder Regelverfahren der Blasfolienextruderanlage erzeugt. Die gewünschte Dickenverteilung über den Folienumfang der in den Ofen einlaufenden Schlauchfolie kann vorzugsweise nach dem aus der DE-PS 30 14 989 bekannten Verfahren erzeugt werden. Dieses bekannte Verfahren erlaubt die Herstellung von Schlauchfolien mit gewünschter unterschiedlicher Dickenverteilung über ihren Umfang. Selbstverständlich können auch andere Steuerungs- oder Regelverfahren zur Erzeugung gewünschter Dickenverteilungen über den Umfang von Schlauchfolien verwendet werden, die gleiches leisten.

Nach dem erfindungsgemäßen Verfahren muß allerdings ermittelt werden, in welcher Weise Dikkenabweichungen der aus dem Ofen austretenden verstreckten Folie durch Änderung der Dickenverteilung des Profils der in den Ofen einlaufenden Folie geändert werden können. Die Abhängigkeiten lassen sich empirisch ermitteln, so daß die erforderlichen Dickenverteilungen der in den Ofen einlaufenden Folie durch die verwendeten Regelverfahren eingestellt werden können. Wesentlich ist lediglich, daß die Messung der Dickenverteilung über das Profil an der verstreckten Schlauchfolie vorgenommen wird, so daß das Dickenprofil der in den Ofen einlaufenden Schlauchfolie in der Weise geregelt oder gesteuert werden kann, daß sich verstreckte Schlauchfolien mit über den Umfang im wesentlichen gleicher Dicke ergeben.

Die Messung der Dickenverteilung über den Umfang der verstreckten Folie kann nach bekannten Verfahren unmittelbar nach dem Austritt der Schlauchfolie aus dem Ofen erfolgen. Die Messung der Dickenverteilung über den Umfang kann auch an der flachgelegten Folie vorgenommen werden. Weiterhin ist es auch möglich, zur Messung der Dickenverteilung über den Umfang aus der gestreckten Schlauchfolie eine Probe zu entnehmen.

Das erneute Aufblasen der nach dem Extrudieren und Aufblasen flachgelegten Schlauchfolie kann nach bekannten Verfahren erfolgen, beispielsweise nach Verfahren, die in den DE-OS 22 63 623 und in der DE-PS 31 19 006 beschrieben worden sind.

Durch das Aufblasverhältnis kann das Reckverhältnis in Umfangsrichtung gesteuert werden. Biaxial verstreckte Schlauchfolien ergeben sich schon, wenn nach dem aus der DE-OS 20 57 255 bekannten Verfahren die Schlauchfolie auf ihren Einlaufdurchmesser aufgeblasen und der Durchmesser während des Durchlaufs durch den Ofen konstant gehalten wird.

Ein Ausführungsbeispiel der Erfindung wird nachstehend anhand der Zeichnung, in deren einziger Figur eine Seitenansicht einer Blasfolienextruderanlage mit nachgeschalteter Einrichtung zum Verstrecken erneut aufgeblasener Schlauchfolien in einem Ofen schematisch dargestellt ist, näher erläutert.

Die Blasfolienextruderanlage besteht aus einem üblichen Extruder 1, der einen ebenfalls bekannten Folienblaskopf 2 mit einer Schmelze aus thermoplastischem Kunststoff speist. Der Blaskopf 2 ist mit Blaseinrichtungen zum Aufblasen der Schlauchfolie 4 und mit bekannten Kühlringen 3 versehen. Der aus dem Folienblaskopf 2 extrudierte und aufgeblasene Folienschlauch 4 durchläuft eine Kalibriereinrichtung 5 und wird anschließend durch Platten 6 und Flachlegewalzen 7 flachgelegt. Die so flachgelegte Schlauchfolienbahn 8 gelangt dann gegebenenfalls unter Zwischenschaltung eines nicht dargestellten, aber an sich bekannten Haltewerkes zu Abquetschwalzen 9. Anschließend wird die flachgelegte Schlauchfolienbahn 8 wieder zu einem Schlauch aufgeblasen. Die Einrichtungen zum Aufblasen sind bekannter Art und werden daher hier nicht näher beschrieben.

Der aufgeblasene Folienschlauch 10 durchläuft einen Wärmeofen 11 und wird im Anschluß daran über eine Flachlegung 12 Abquetschwalzen 13 zugeführt. Diesen Abquetschwalzen 13 ist eine Aufrollung 14 nachgeschaltet, die den gereckten Folienschlauch mit einer höheren Geschwindigkeit aufwickelt als sie den Abquetschwalzen 9 zugeführt wird. Aus der Figur ist zu erkennen, daß unmittelbar hinter dem Ofen eine kapazitive Dickenmeßeinrichtung 15 vorgesehen ist, die mit einem umlaufenden Meßkopf 16 besetzt ist. Die von diesem Meßkopf ermittelten Werte werden einem Rechner 17 zugeleitet, über den dann die entsprechenden Temperiersegmente im Blaskopf 2 beaufschlagt werden.

Die Regelung der Dickenverteilung über den Umfang der in den Ofen 11 einlaufenden Schlauchfolie 10 erfolgt vorzugsweise nach dem in der DE-PS 30 14 989 beschriebenen Verfahren. Dabei werden die an der verstreckten Folie gemessenen Dicken auf eine Dickenverteilung der einlaufenden Folie umgerechnet, die die gewünschte gleichmäßige Dickenverteilung in der verstreckten Schlauchfolie ergibt.

## Ansprüche

1. Verfahren zur Regelung der Foliendicke von axial, vorzugsweise biaxial verstreckten Schlauchfolien, die nach ihrer Herstellung in einer Blasfolienextruderanlage flachgelegt, anschließend wieder zu einer Schlauchfolienblase aufgeblasen oder zu einem Folienschlauch aufgeweitet und im aufgeblasenen oder aufgeweiteten Zustand einen Ofen durchlaufen, aus dem sie unter erneuter Flachlegung mit einer Geschwindigkeit abgezogen werden, die entsprechend dem gewünschten Reckverhältnis gegenüber der Einlaufgeschwindigkeit erhöht ist,

**dadurch gekennzeichnet,**

daß die Foliendicke der aus dem Ofen austretenden verstreckten Schlauchfolie vor oder nach ihrer Flachlegung über ihren Umfang gemessen und entsprechend den gemessenen Dicken des Umfangprofils die Dickenverteilung über das Umfangsprofil der in der Blasfolienextruderanlage hergestellten Schlauchfolie so eingestellt wird, daß in dem Ofen während des Verstreckens aufgrund ungleichmäßiger Erwärmung und gegebenenfalls anderer Störeinflüsse erzeugte Abweichungen von der mittleren Foliendicke im wesentlichen kompensiert werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 335 411 (IDEMITSU PETROCHEMICAL CO., LTD)<br>* Figur 1; Seite 7, Zeilen 20-49; Anspruch 1 *<br>– – – | 1 | B 29<br>C 47 92<br>B 29 C 55.28 |
| A | DE-A-2 658 518 (REIFENHÄUSER KG)<br>* Figur 1; Anspruch 1 *<br>– – – | 1 | |
| A | US-A-4 189 288 (HALTER)<br>* Figur 1; Anspruch 1 *<br>– – – – – | 1 | |
| | | | RECHERCHIERTE SACHGEBIETE (Int. Cl.5) |
| | | | B 29 C 47 00<br>B 29 C 55.00 |

Der vorliegende Recherchenbericht wurde für alle Patentansprüche erstellt

| Recherchenort | Abschlußdatum der Recherche | Prüfer |
|---|---|---|
| Den Haag | 19 Februar 91 | KIRSTEN K.R.M. |